# EUROPEAN PATENT APPLICATION

(11) **EP 4 517 381 A1**
(43) Date of publication of application: **05.03.2025**
(21) Application number: 23796078.6
(22) Date of filing: 10.04.2023
(51) Int. Cl.: G01S 13/89, G01S 13/04, G01V 8/18

(54) **OCCUPANT DETECTION DEVICE AND OCCUPANT DETECTION METHOD**

(30) Priority: 27.04.2022 JP 2022073019
(71) Applicant: AISIN CORPORATION, Kariya-shi, Aichi 448-8650 (JP)
(72) Inventor: AMANO, Jun, Kariya-shi, Aichi 448-8650 (JP)
(74) Representative: TBK
(86) International application number: PCT/JP2023/014604
(87) International publication number: WO 2023/210333

(57) **Abstract**

An occupant detection apparatus includes a sensor that transmits a transmission wave toward inside of a compartment of a mobile object and receives a reflected wave generated by the transmission wave being reflected by an object, an acquisition unit that acquires, on the basis of intensity of the reflected wave, point group information indicating a position of an object moving in the compartment as a point group including a plurality of detection points in a three-dimensional map corresponding to a space in the compartment, an arithmetic unit that calculates, on the basis of the point group information, the number of plots indicating the number of the detection points for each seating position set in the compartment, and a determination unit that determines that an occupant is present at the seating position, in a case where a state in which a feature value corresponding to a time-series change in a first period in the number of the plots of the seating position subjected to detection satisfies a predetermined condition continues for a second period or longer.

## Description

### TECHNICAL FIELD

Embodiments of the present invention relate to an occupant detection apparatus and an occupant detection method.

### BACKGROUND ART

In a vehicle control system or the like, an occupant detection apparatus that detects an occupant present in an occupant compartment on the basis of data acquired by a sensor installed in the occupant compartment and transmits and receives electromagnetic waves or the like is utilized. Such an occupant detection apparatus utilizes a technique for detection a motion (for example, pulsation or the like of a chest, a back, or the like) unique to a living body on the basis of a time-series change in intensity of reflected waves.

### CITATIONS LIST

### PATENT LITERATURE

Patent Literature 1: JP 2020-56628 A

### SUMMARY OF INVENTION

### TECHNICAL PROBLEMS

In a case where an occupant present in a compartment of a mobile object such as a vehicle is to be detected, there is a possibility that an object such as a load present in the compartment is erroneously detected as an occupant due to an effect of vibration or the like of the mobile object.

Therefore, embodiments of the present invention provide an occupant detection apparatus and occupant detection method that allow reduction in an effect of, for example, vibration of a mobile object.

### SOLUTIONS TO PROBLEMS

An occupant detection apparatus as an embodiment of the present invention includes a sensor that transmits a transmission wave toward inside of a compartment of a mobile object, and receives a reflected wave generated by the transmission wave being reflected by an object, an acquisition unit that acquires, on the basis of intensity of the reflected wave, point group information indicating a position of an object moving in the compartment as a point group including a plurality of detection points in a three-dimensional map corresponding to a space in the compartment, an arithmetic unit that calculates, on the basis of the point group information, the number of plots indicating the number of the detection points for each seating position set in the compartment, and a determination unit that determines that an occupant is present at the seating position, in a case where a state in which a feature value corresponding to a time-series change in a first period in the number of the plots of the seating position subjected to detection satisfies a predetermined condition continues for a second period or longer.

According to the configuration described above, it is determined that an occupant is present, in a case where the state in which the feature value corresponding to the time-series change in the first period in the number of plots satisfies the predetermined condition continues for the second period or longer. As a result, it is possible to reduce chances of erroneous detection caused by temporary movement of an object other than an occupant due to, for example, vibration of the mobile object, and thus to improve detection accuracy.

Furthermore, in the configuration described above, the feature value may be a minimum value of a plural number of plots acquired in the first period, and the determination unit may determine that an occupant is present, in a case where a state in which the minimum value is equal to or greater than a threshold value continues for the second period or longer.

According to the configuration described above, the minimum value of the plural number of plots acquired in the first period is utilized as the feature value, by which an effect of vibration of the mobile object, for example, can be effectively reduced.

Furthermore, in the configuration described above, the feature value may be a mean value of the plural number of plots acquired in the first period, and the determination unit may determine that an occupant is present, in a case where a state in which the mean value is equal to or greater than a threshold value continues for the second period or longer.

According to the configuration described above, the mean value of the plural number of plots acquired in the first period is utilized as the feature value, by which an effect of vibration of the mobile object, for example, can be effectively reduced.

Furthermore, in the configuration described above, the feature value may include a minimum value and mean value of the plural number of plots acquired in the first period, and the determination unit may determine that an occupant is present, in a case where a state in which the minimum value is equal to or greater than a threshold value and the mean value is equal to or greater than a threshold value continues for the second period or longer.

According to the configuration described above, the minimum value and mean value of the plural number of plots acquired in the first period are utilized as the feature value, by which an effect of vibration of the mobile object, for example, can be effectively reduced.

Furthermore, in the configuration described above, the sensor may be installed on a ceiling portion behind a backrest portion of a seat in a first row provided at a front of inside of the compartment, and the seating position to be subjected to detection may be set so as to correspond to a seat in a second or subsequent row.

According to the configuration described above, it is possible to highly accurately detect an occupant present in a back seat, such as a second-row seat and third-row seat.

Furthermore, an occupant detection method as an embodiment of the present invention includes acquiring, on the basis of intensity of a reflected wave generated by a transmission wave transmitted toward inside of a compartment of a mobile object being reflected by an object, point group information indicating a position of an object moving in the compartment as a point group including a plurality of detection points in a three-dimensional map corresponding to a space in the compartment, calculating, on the basis of the point group information, the number of plots indicating the number of the detection points for each seating position set in the compartment, and determining that an occupant is present at the seating position, in a case where a state in which a feature value corresponding to a time-series change in a first period in the number of the plots of the seating position subjected to detection satisfies a predetermined condition continues for a second period or longer.

### BRIEF DESCRIPTION OF DRAWINGS

FIG. 1 is a side view showing an example of a configuration of an occupant compartment of a vehicle in which an occupant detection apparatus according to a first embodiment is mounted.
FIG. 2 is a block diagram showing an example of a hardware configuration of the occupant detection apparatus according to the first embodiment.
FIG. 3 is a block diagram showing an example of a functional configuration of the occupant detection apparatus according to the first embodiment.
FIG. 4 is a diagram showing an example of point group information corresponding to a bird's-eye view of the occupant compartment according to the first embodiment.
FIG. 5 is a diagram showing an example of the point group information corresponding to a top view of the occupant compartment according to the first embodiment.
FIG. 6 is a diagram showing an example of a time-series change in the number of plots in a seating position where an occupant is present in the first embodiment.
FIG. 7 is a diagram showing an example of a time-series change in the number of plots in a seating position where no occupant is present in the first embodiment.
FIG. 8 is a flowchart showing an example of processing in the occupant detection apparatus according to the first embodiment.
FIG. 9 is a flowchart showing an example of processing in an occupant detection apparatus according to a second embodiment.
FIG. 10 is a flowchart showing an example of processing in the occupant detection apparatus according to a third embodiment.

### DESCRIPTION OF EMBODIMENTS

Hereinafter, exemplary embodiments of the present invention are disclosed. The configurations of the embodiments described below, and functions, results, and effects brought about by the configurations are merely an example. The present invention is also feasible by configurations other than the configurations disclosed in the embodiments described below, and at least one of various effects based on a basic configuration and derivative effects may be obtained.

### (First embodiment)

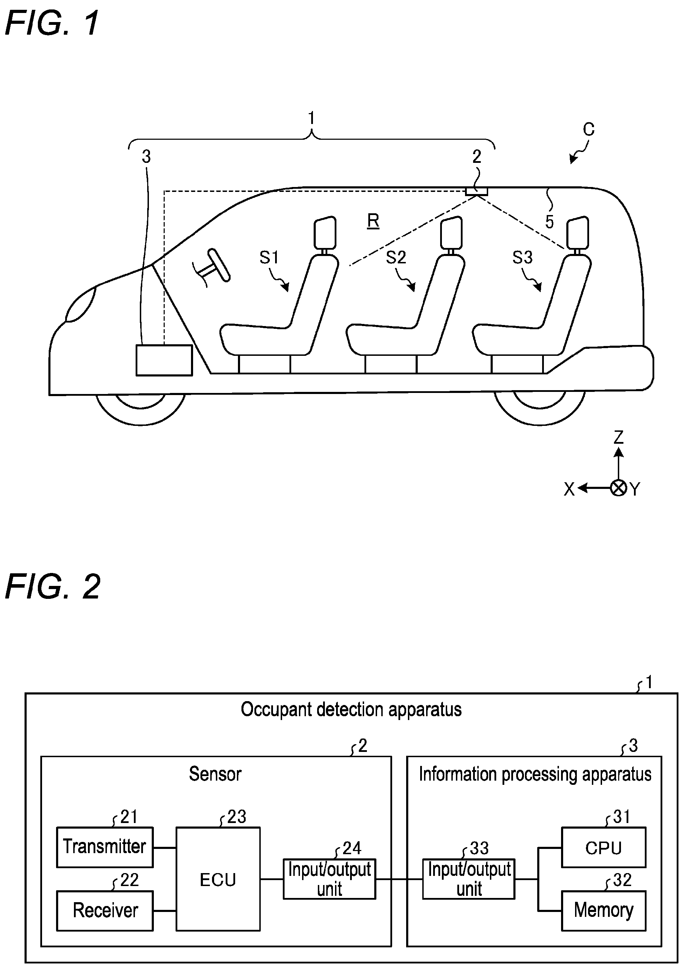

FIG. 1 is a side view showing an example of a configuration of an occupant compartment R of a vehicle C in which an occupant detection apparatus 1 according to a first embodiment is mounted. In the drawing, an X direction corresponds to a direction from a rear portion to front portion of the vehicle C, a Y direction corresponds to a direction from a left-side surface to right-side surface of the vehicle C, and a Z direction corresponds to a direction from a lower portion to upper portion of the vehicle C.

The vehicle C is an example of a mobile object, and may be an automobile or the like using, for example, an internal combustion engine, a motor, or both of them (hybrid mechanism) as a drive source. The vehicle C of the present embodiment is a so-called three-row seat vehicle, and includes a first seat row S1, a second seat row S2, and a third seat row S3. The first seat row S1 includes a driver seat and a passenger seat.

The occupant detection apparatus 1 is an apparatus that detects an occupant present in the occupant compartment R. In the present embodiment, there will be described the occupant detection apparatus 1 that detects an occupant present behind the first seat row S1, that is, in the second seat row S2 and the third seat row S3.

The occupant detection apparatus 1 includes a sensor 2 and an information processing apparatus 3. The sensor 2 is installed on a ceiling 5 of the vehicle C, transmits a transmission wave toward inside the occupant compartment R, and receives a reflected wave generated by the transmission wave being reflected by an object in the occupant compartment R. The sensor 2 of the present embodiment is installed behind a backrest portion of the first seat row S1, and is positioned substantially above a backrest portion of the second seat row S2 in the example shown in FIG. 1. The information processing apparatus 3 is installed in a dashboard and is connected to the sensor 2 via a network such as a controller area network (CAN). Note that installation positions of the sensor 2 and information processing apparatus 3 are not limited to the above-described example. Furthermore, a plurality of sensors 2 may be installed.

FIG. 2 is a block diagram showing an example of a hardware configuration of the occupant detection apparatus 1 according to the first embodiment. The sensor 2 includes a transmitter 21, a receiver 22, an electronic control unit (ECU) 23, and an input/output unit 24. The transmitter 21 is a device that transmits (emits) an electromagnetic wave of a predetermined frequency (60 GHz to 65 GHz, for example) into the occupant compartment R as a transmission wave. The receiver 22 is a device that receives a reflected wave generated by the transmission wave being reflected by an object present in the occupant compartment R, and generates an electric signal indicating intensity of the reflected wave. The transmitter 21 and the receiver 22 may be configured by utilizing, for example, an oscillation circuit, a piezoelectric element, an AD converter, an amplifier, a filter circuit, or the like. The transmitter 21 and the receiver 22 may be configured separately or integrally. The ECU 23 is a microcontroller configured by utilizing a central processing unit (CPU), a memory, and the like, and executes processing related to control of the transmitter 21 and the receiver 22, generation of data based on the reflected wave received by the receiver 22, and the like. The input/output unit 24 is an interface device that establishes communication conforming to a predetermined standard, such as the CAN, with the information processing apparatus 3 or another device.

The information processing apparatus 3 includes a CPU 31, a memory 32, and an input/output unit 33. The CPU 31 executes various kinds of arithmetic processing according to a program stored in the memory 32. The memory 32 may be configured by utilizing an appropriate volatile memory and non-volatile memory. The memory 32 stores programs for causing the CPU 31 to execute various kinds of processing for implementing functions of the occupant detection apparatus 1, setting data, data acquired from the sensor 2, data generated by the CPU 31, and the like. The input/output unit 33 is an interface device that establishes communication conforming to a predetermined standard, such as the CAN, with the sensor 2 or another device.

Note that the hardware configuration shown in FIG. 2 is an example, and the hardware configuration of the occupant detection apparatus 1 is not limited to the above-described example.

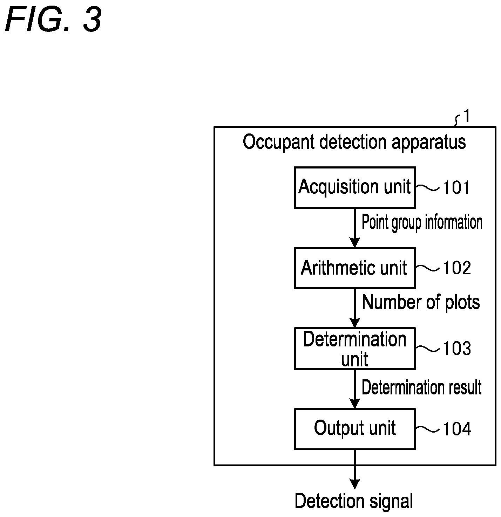

FIG. 3 is a block diagram showing an example of a functional configuration of the occupant detection apparatus 1 according to the first embodiment. The occupant detection apparatus 1 of the present embodiment includes an acquisition unit 101, an arithmetic unit 102, a determination unit 103, and an output unit 104. These functional units 101 to 104 may be configured by, for example, cooperation of hardware and software (program) as exemplified in FIG. 2. Furthermore, some or all of these functional units 101 to 104 may be configured by dedicated hardware (a circuit or the like) such as an application specific integrated circuit (ASIC) or a field-programmable gate array (FPGA).

On the basis of the intensity of the reflected wave received by the sensor 2, the acquisition unit 101 acquires point group information indicating a position of the object (moving object) moving in the occupant compartment R, as a point group including a plurality of detection points in a three-dimensional map corresponding to a space in the occupant compartment R.

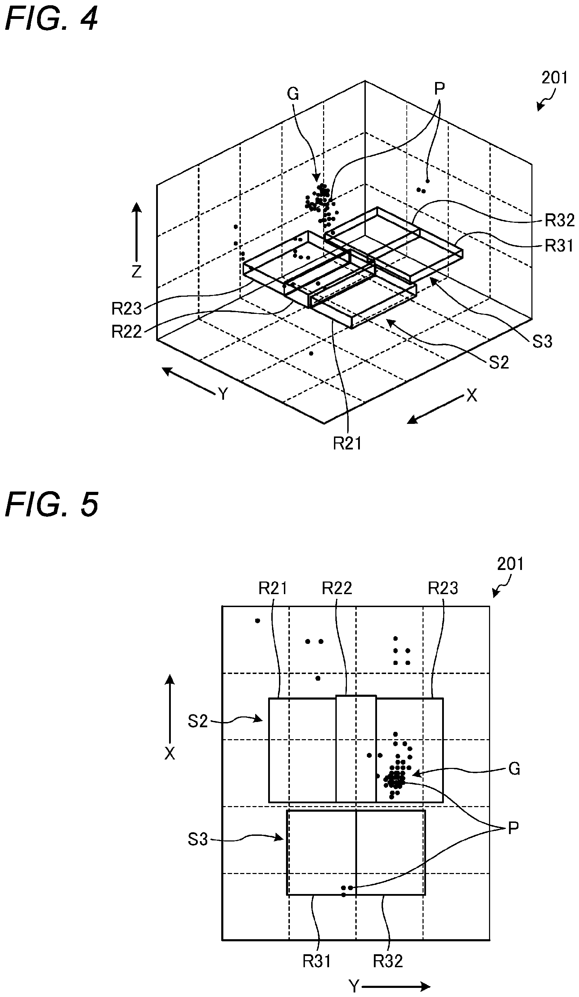

FIG. 4 is a diagram showing an example of point group information 201 corresponding to a bird's-eye view of the occupant compartment R according to the first embodiment. FIG. 5 is a diagram showing an example of the point group information 201 corresponding to a top view of the occupant compartment R according to the first embodiment. The point group information 201 exemplified here is information obtained by plotting, on the three-dimensional map (a voxel map or the like, for example) corresponding to the space in the occupant compartment R, a point (a voxel or the like, for example) corresponding to the position of the moving object as a detection point P. Exemplified here is a case where three seating positions R21 to R23 are set on the second seat row S2, two seating positions R31 and R32 are set on the third seat row S3, and an occupant is seated at the seating position R23 at a right end of the second seat row S2. In such a case, as shown in FIGS. 4 and 5, a point group G including a plurality of detection points P corresponding to pulsation of a chest or back of the occupant, for example, appears in a portion corresponding to a space above the seating position R23 in the three-dimensional map. The point group information 201 includes such information regarding the point group G, that is, information indicating positions, the number, and the like of the plurality of detection points P appearing on the three-dimensional map.

On the basis of the point group information 201 as described above, the arithmetic unit 102 (refer to FIG. 3) calculates the number of plots indicating the number of the detection points P, for each of the seating positions R21 to R23, R31, and R32 set in the occupant compartment R.

In a case where a state in which a feature value corresponding to a time-series change in a first period in the number of plots in the seating position subjected to the detection satisfies a predetermined condition continues for a second period or longer, the determination unit 103 determines that an occupant is present at the seating position. In the present embodiment, a minimum value of the plural number of plots acquired in the first period is set as the feature value. The plural number of plots acquired in the first period may be, for example, the plural number of plots acquired in each of a plurality of unit times (frames) dividing the first period. In a case where a state in which the minimum value as the feature value is equal to or greater than a threshold value continues for the second period or longer, the determination unit 103 determines that an occupant is present at the seating position subjected to the detection.

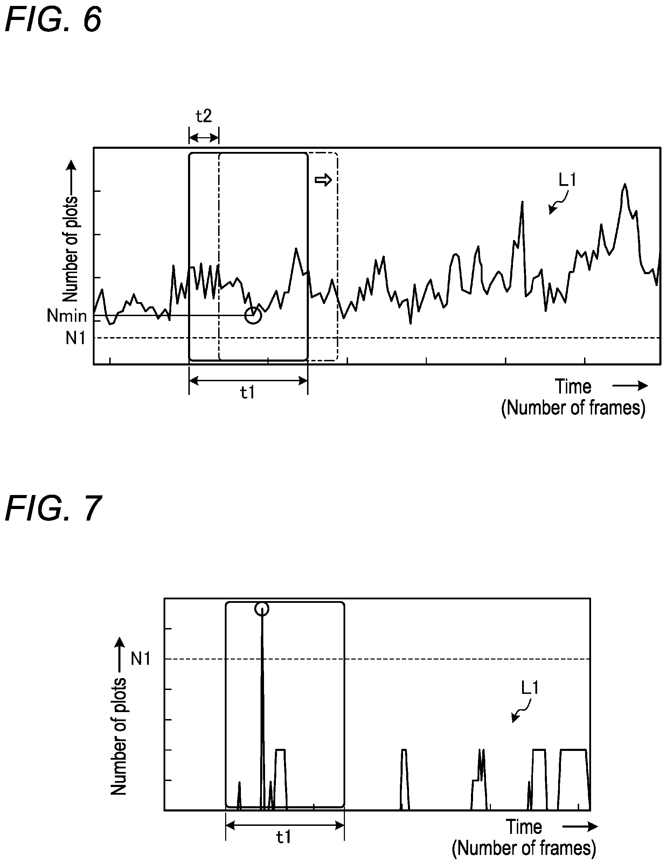

FIG. 6 is a diagram showing an example of a time-series change in the number of plots in a seating position where an occupant is present in the first embodiment. In the graph shown in FIG. 6, the horizontal axis corresponds to an elapsed time (the number of frames), and the vertical axis corresponds to the number of plots in the seating position (the seating position R23, for example) subjected to the detection. The line L1 denotes a time-series change in the number of plots in the seating position subjected to the detection.

FIG. 6 exemplifies a first period t1, a second period t2, a minimum value Nmin, and a threshold value N1. The minimum value Nmin is a minimum value among the plural number of plots acquired in the first period t1 that is preset. In a case where a state in which such a minimum value Nmin is equal to or greater than the threshold value N1 that is preset (an example of a state in which the feature value satisfies the predetermined condition) continues for the second period t2 or longer, the determination unit 103 of the present embodiment determines that an occupant is present at the seating position subjected to the detection. The first period t1 and the second period t2 are values that should be set appropriately according to a using state or the like, and, for example, the first period t1 may be about 5 seconds to 10 seconds (25 frames to 50 frames), and the second period t2 may be about 1 second to 5 seconds (5 frames to 25 frames). With such a determination method, it is possible to reduce possibilities of erroneous detection of detection points P (point group G) as an occupant, the points P corresponding to temporary movement of an object (a load, or the like) other than the occupant, which is caused by, for example, vibration of the vehicle C.

FIG. 7 is a diagram showing an example of a time-series change in the number of plots in a seating position where no occupant is present in the first embodiment. As exemplified in FIG. 7, even in a case where no occupant is present, an object other than an occupant may temporarily move due to, for example, vibration of the vehicle C, and the number of plots may temporarily become equal to or greater than the threshold value N1. However, as shown in FIG. 7, according to the determination unit 103 of the present embodiment, it is possible to eliminate an effect of a temporary increase in the number of plots due to, for example, vibration of the vehicle C, because, as shown in FIG. 6, presence or absence of an occupant is determined on the basis of whether or not a state in which the minimum value Nmin in the first period t1 is equal to or greater than the threshold value N1 has continued for the second period t2 or longer.

On the basis of a result of the determination by the determination unit 103, the output unit 104 (refer to FIG. 3) outputs a detection signal indicating whether or not an occupant is present at the seating position subjected to the detection. The detection signal is utilized for a predetermined function such as a seat belt reminder, for example.

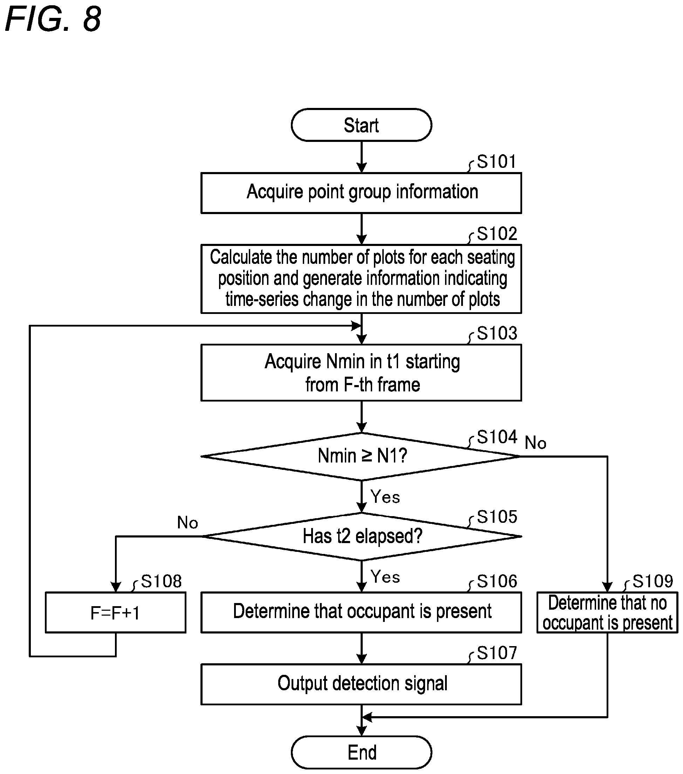

FIG. 8 is a flowchart showing an example of processing in the occupant detection apparatus 1 according to the first embodiment. When occupant detection processing is started, the acquisition unit 101 acquires the point group information 201 based on the intensity of the reflected wave received by the sensor 2 (S101). The arithmetic unit 102 calculates the number of plots for each seating position on the basis of the point group information 201, and generates information indicating the time-series change in the number of plots as exemplified in FIG. 6 for each seating position (S102).

The determination unit 103 acquires, from the information indicating the time-series change in the number of plots of the seating position subjected to the detection, the minimum value Nmin of the number of plots in the first period t1 (a period for 40 frames, for example) starting from an F (for example, an initial value 0)-th frame (F-th frame) (S103), and determines whether or not the minimum value Nmin is equal to or greater than the threshold value N1 (S104). In a case where the minimum value Nmin is equal to or greater than the threshold value N1 (S104: Yes), the determination unit 103 determines whether or not the second period t2 (for example, a period of 10 frames) has elapsed (S105). In a case where the second period t2 has not elapsed (S105: No), the determination unit 103 adds 1 to the F (S108), and acquires the minimum value Nmin in the first period t1 starting from the F (for example, 1)-th frame (S103).

In a case where the second period t2 has elapsed (S105: Yes), that is, in a case where the state in which the minimum value Nmin is equal to or greater than the threshold value N1 continues for the second period t2 (for 10 frames, for example), the determination unit 103 determines that an occupant is present at the seating position subjected to the detection (S 106), and the output unit 104 outputs, to a predetermined mechanism, a detection signal indicating that the occupant is present at the seating position (S107).

In a case where the minimum value Nmin is not equal to or greater than the threshold value N1 (S104: No), that is, in a case where a state in which the minimum value Nmin becomes smaller than the threshold value N1 occurs before the second period t2 elapses, the determination unit 103 determines that no occupant is present at the seating position subjected to the detection (S109). Thereafter, presence or absence of an occupant is determined for other seating positions in a similar manner as described above.

As described above, according to the present embodiment, it is determined that an occupant is present in a case where a state in which the minimum value Nmin of the plural number of plots acquired in the first period t1 is equal to or greater than the threshold value N1 (an example of a state in which the feature value corresponding to the time-series change in the number of plots in the first period t1 satisfies the predetermined condition) continues for the second period t2 or longer. As a result, it is possible to reduce chances of erroneous detection caused by temporary movement of an object other than an occupant due to, for example, vibration of the vehicle C, and thus to improve detection accuracy.

Other embodiments will be described below, in which description of parts the same as or similar to the parts in the first embodiment will be omitted.

### (Second embodiment)

An occupant detection apparatus 1 of a second embodiment is different from the occupant detection apparatus 1 of the first embodiment in that a mean value of a plural number of plots acquired in a first period t1 is used as a feature value corresponding to a time-series change in the number of plots in the first period t1. That is, in a case where a state in which the mean value is equal to or greater than a threshold value continues for a second period t2 or longer, a determination unit 103 of the present embodiment determines that an occupant is present at a seating position subjected to detection.

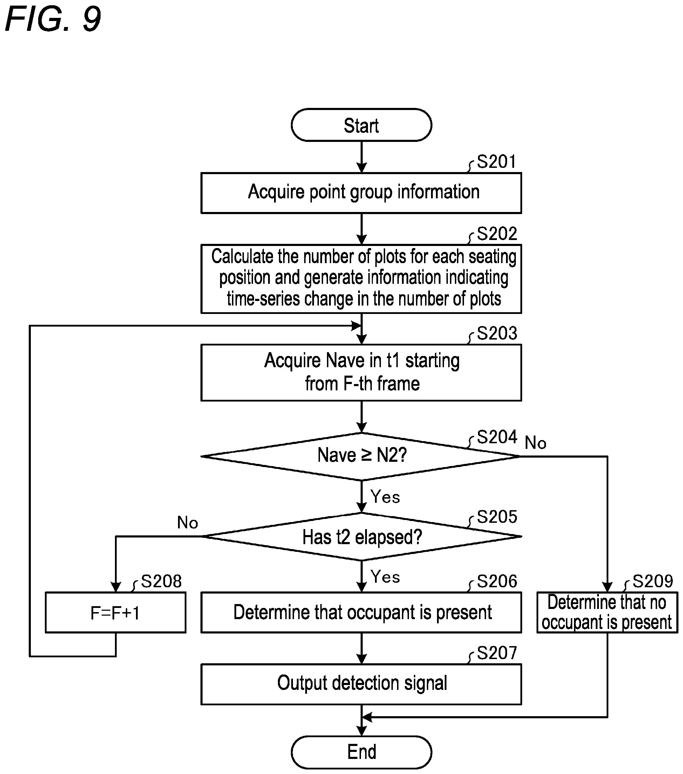

FIG. 9 is a flowchart showing an example of processing in the occupant detection apparatus 1 according to the second embodiment. When occupant detection processing is started, an acquisition unit 101 acquires point group information 201 based on intensity of a reflected wave received by a sensor 2 (S201). An arithmetic unit 102 calculates the number of plots for each seating position on the basis of the point group information 201, and generates information indicating the time-series change in the number of plots for each seating position (S202).

The determination unit 103 acquires, from the information indicating the time-series change in the number of plots of the seating position subjected to the detection, a mean value Nave of the number of plots in the first period t1 (a period for 40 frames, for example) starting from an F (for example, an initial value 0)-th frame (F-th frame) (S203), and determines whether or not the mean value Nave is equal to or greater than a threshold value N2 (S204). In a case where the mean value Nave is equal to or greater than the threshold value N2 (S204: Yes), the determination unit 103 determines whether or not the second period t2 (for example, a period of 10 frames) has elapsed (S205). In a case where the second period t2 has not elapsed (S205: No), the determination unit 103 adds 1 to the F (S208), and acquires the mean value Nave in the first period t1 starting from the F (for example, 1)-th frame (S203).

In a case where the second period t2 has elapsed (S205: Yes), that is, in a case where the state in which the mean value Nave is equal to or greater than the threshold value N2 continues for the second period t2 (for 10 frames, for example), the determination unit 103 determines that an occupant is present at the seating position subjected to the detection (S206), and an output unit 104 outputs, to a predetermined mechanism, a detection signal indicating that the occupant is present at the seating position (S207).

In a case where the mean value Nave is not equal to or greater than the threshold value N2 (S204: No), that is, in a case where a state in which the mean value Nave becomes smaller than the threshold value N2 occurs before the second period t2 elapses, the determination unit 103 determines that no occupant is present at the seating position subjected to the detection (S209). Thereafter, presence or absence of an occupant is determined for other seating positions in a similar manner as described above.

As described above, according to the present embodiment, it is determined that an occupant is present in a case where a state in which the mean value Nave of the plural number of plots acquired in the first period t1 is equal to or greater than the threshold value N2 (an example of a state in which the feature value corresponding to the time-series change in the number of plots in the first period t1 satisfies the predetermined condition) continues for the second period t2 or longer. As a result, similarly to the first embodiment, it is possible to reduce chances of erroneous detection caused by temporary movement of an object other than an occupant due to, for example, vibration of the vehicle C, and thus to improve detection accuracy.

### (Third embodiment)

An occupant detection apparatus 1 of a third embodiment is different from the occupant detection apparatus 1 of the first embodiment or second embodiment in that a minimum value Nmin and mean value Nave of a plural number of plots acquired in a first period t1 are used as a feature value corresponding to a time-series change in the number of plots in the first period t1. That is, in a case where a state in which the minimum value Nmin is equal to or greater than the threshold value N1 and the mean value Nave is equal to or greater than the threshold value N2 continues for a second period t2 or longer, a determination unit 103 of the present embodiment determines that an occupant is present at a seating position subjected to detection.

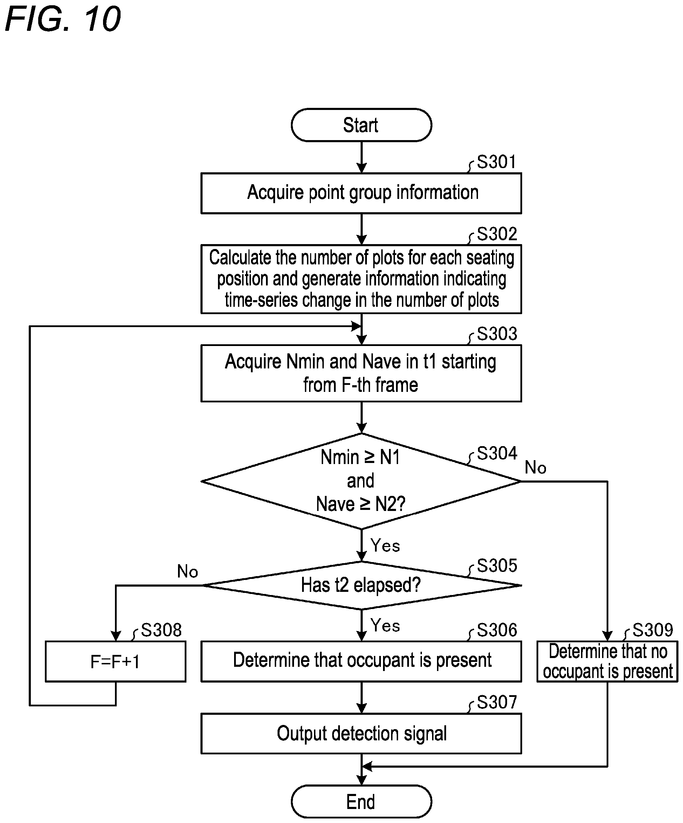

FIG. 10 is a flowchart showing an example of processing in the occupant detection apparatus 1 according to the third embodiment. When occupant detection processing is started, an acquisition unit 101 acquires point group information 201 based on intensity of a reflected wave received by a sensor 2 (S301). An arithmetic unit 102 calculates the number of plots for each seating position on the basis of the point group information 201, and generates information indicating the time-series change in the number of plots for each seating position (S302).

The determination unit 103 acquires, from the information indicating the time-series change in the number of plots of the seating position subjected to the detection, the minimum value Nmin and mean value Nave of the number of plots in the first period t1 (a period for 40 frames, for example) starting from an F (for example, an initial value 0)-th frame (F-th frame) (S303), and determines whether or not the minimum value Nmin is equal to or greater than the threshold value N1 and the mean value Nave is equal to or greater than the threshold value N2 (S304). **In** a case where the minimum value Nmin is equal to or greater than the threshold value N1 and the mean value Nave is equal to or greater than the threshold value N2 (S304: Yes), the determination unit 103 determines whether or not the second period t2 (for example, a period of 10 frames) has elapsed (S305). **In** a case where the second period t2 has not elapsed (S305: No), the determination unit 103 adds 1 to the F (S308), and acquires the minimum value Nmin and mean value Nave in the first period t1 starting from the F (for example, 1)-th frame (S303).

In a case where the second period t2 has elapsed (S305: Yes), that is, in a case where the state in which the minimum value Nmin is equal to or greater than the threshold value N1 and the mean value Nave is equal to or greater than the threshold value N2 continues for the second period t2 (for 10 frames, for example), the determination unit 103 determines that an occupant is present at the seating position subjected to the detection (S306), and the output unit 104 outputs, to a predetermined mechanism, a detection signal indicating that the occupant is present at the seating position (S307).

In a case where the minimum value Nmin is equal to or greater than the threshold value N1 and the mean value Nave is not equal to or greater than the threshold value N2 (S304: No), that is, in a case where a state in which the minimum value Nmin becomes smaller than the threshold value N1 or in which the mean value Nave becomes smaller than the threshold value N2 occurs before the second period t2 elapses, the determination unit 103 determines that no occupant is present at the seating position subjected to the detection (S309). Thereafter, presence or absence of an occupant is determined for other seating positions in a similar manner as described above.

As described above, according to the present embodiment, it is determined that an occupant is present in a case where a state in which the minimum value Nmin is equal to or greater than the threshold value N1 and the mean value Nave is equal to or greater than the threshold value N2 (an example of a state in which the feature value corresponding to the time-series change in the number of plots in the first period t1 satisfies the predetermined condition) continues for the second period t2 or longer. As a result, as compared to the first embodiment or the second embodiment, it is possible to strictly reduce chances of erroneous detection caused by temporary movement of an object other than an occupant due to, for example, vibration of the vehicle C, and thus to improve detection accuracy.

A program for causing a computer (information processing apparatus 3) to execute processing for implementing the functions of the occupant detection apparatus 1 of the embodiments described above may be stored in a computer-readable storage medium, such as a CD-ROM, a CD-R, a memory card, a digital versatile disk (DVD), and a flexible disk (FD), by using a file in an installable format or an executable format, and provided as a computer program product. Furthermore, the program may be provided by being stored on a computer connected to a network such as the Internet and downloaded via the network. Furthermore, the program may be provided or distributed via a network such as the Internet.

The embodiments of the present invention described above are by way of an example only, and are not intended to limit the scope of the invention. The novel embodiments described may be implemented in a variety of other forms, and various omissions, substitutions, and changes may be made without departing from the gist of the invention. These embodiments and modifications thereof are included in the scope and gist of the invention, and are included in the invention described in the claims and range of equivalents thereof.

### REFERENCE SIGNS LIST

1: Occupant detection apparatus, 2: Sensor, 3: Information processing apparatus, 5: Ceiling, 21: Transmitter, 22: Receiver, 24: Input/output unit, 31: CPU 32
Memory, 33: Input/output unit, 101: Acquisition unit, 102: Arithmetic unit, 103: Determination unit, 104: Output unit, 201: Point group information, C: Vehicle, G: Point group, R: Occupant compartment, seating position, R21 to R23, R31, R32, P: Detection point, S1: First seat row, S2: Second seat row, S3: Third seat row, t1: First period, and t2: Second period

## Claims

1. An occupant detection apparatus comprising:
a sensor that transmits a transmission wave toward inside of a compartment of a mobile object, and receives a reflected wave generated by the transmission wave being reflected by an object;
an acquisition unit that acquires, on the basis of intensity of the reflected wave, point group information indicating a position of an object moving in the compartment as a point group including a plurality of detection points in a three-dimensional map corresponding to a space in the compartment;
an arithmetic unit that calculates, on the basis of the point group information, the number of plots indicating the number of the detection points for each seating position set in the compartment; and
a determination unit that determines that an occupant is present at the seating position, in a case where a state in which a feature value corresponding to a time-series change in a first period in the number of the plots of the seating position subjected to detection satisfies a predetermined condition continues for a second period or longer.

2. The occupant detection apparatus according to claim 1,
wherein
the feature value is a minimum value of a plural number of the plots acquired in the first period, and
the determination unit determines that an occupant is present, in a case where a state in which the minimum value is equal to or greater than a threshold value continues for the second period or longer.

3. The occupant detection apparatus according to claim 1,
wherein
the feature value is a mean value of a plural number of the plots acquired in the first period, and
the determination unit determines that an occupant is present, in a case where a state in which the mean value is equal to or greater than a threshold value continues for the second period or longer.

4. The occupant detection apparatus according to claim 1,
wherein
the feature value includes a minimum value and mean value of a plural number of the plots acquired in the first period, and
the determination unit determines that an occupant is present, in a case where a state in which the minimum value is equal to or greater than a threshold value and the mean value is equal to or greater than a threshold value continues for the second period or longer.

5. The occupant detection apparatus according to any one of claims 1 to 4,
wherein
the sensor is installed on a ceiling portion behind a backrest portion of a seat in a first row provided at a front of inside of the compartment, and
the seating position to be subjected to detection is set so as to correspond to a seat in a second or subsequent row.

6. An occupant detection method comprising:
acquiring, on the basis of intensity of a reflected wave generated by a transmission wave transmitted toward inside of a compartment of a mobile object being reflected by an object, point group information indicating a position of an object moving in the compartment as a point group including a plurality of detection points in a three-dimensional map corresponding to a space in the compartment;
calculating, on the basis of the point group information, the number of plots indicating the number of the detection points for each seating position set in the compartment; and
determining that an occupant is present at the seating position, in a case where a state in which a feature value corresponding to a time-series change in a first period in the number of the plots of the seating position subjected to detection satisfies a predetermined condition continues for a second period or longer.
